# EUROPEAN PATENT APPLICATION

(11) **EP 4 755 723 A1**
(43) Date of publication of application: **10.06.2026**
(21) Application number: 25218711.7
(22) Date of filing: 26.11.2025
(51) Int. Cl.: B60R 13/02, B60R 21/205, B60R 21/2165

(54) **INSTRUMENT TRIM PANEL**

(30) Priority: 05.12.2024 GB 202417881
(71) Applicant: Jaguar Land Rover Limited, Coventry, Warwickshire CV3 4LF (GB)
(72) Inventor: Little, Oliver, Coventry, CV3 4LF (GB); Lawes, Bradley, Coventry, CV3 4LF (GB)
(74) Representative: Jaguar Land Rover Patents Department

(57) **Abstract**

The present invention relate to an instrument trim panel for an automotive vehicle comprising a body having an exterior surface, at least a portion of which is textured, and a further surface, opposite said exterior surface, which is substantially non-textured. The textured portion of the exterior surface comprises a plurality of substantially parallel grooves, which, in use, extend in a direction which is aligned with a longitudinal axis of the automotive vehicle. Meanwhile, the substantially non-textured surface comprises a plurality of frangible tear lines, configured to create one or more areas of weakness within the body of the instrument trim panel to facilitate the deployment of an airbag through the instrument trim panel in the event of a collision, which are longitudinally aligned with one or more of the substantially parallel grooves.

## Description

### TECHNICAL FIELD

The present disclosure relates to an instrument trim panel. Aspects of the invention relate to an instrument trim panel for an automotive vehicle, to an automotive vehicle body comprising said instrument trim panel, and to an automotive vehicle comprising said automotive vehicle body.

### BACKGROUND

It is known to provide instrument trim panels featuring frangible tear lines (or seams) formed on the non-visible (or Class-B) surface to allow an airbag to be deployed through the instrument trim panel in the event of a collision.

The break-through strength of the instrument trim panel is primarily influenced by the strength of the material from which the instrument trim panel is formed and also by the amount of material that is present between the point within the thickness of the instrument trim panel at which the tear line(s) terminate and the exterior (or Class-A) surface of the trim panel.

As such, when machining frangible tear lines into instrument trim panels, it is important for manufacturers to accurately control and maintain the depth of cut to help ensure that the panel(s) exhibit the desired breakthrough strength. However, in practice, maintaining a consistent amount of material between the termination point(s) of the tear line(s) and the exterior surface of the trim panel can be challenging to achieve, particularly when machining frangible tear lines into panels which feature varying thicknesses.

It is an aim of the present invention to address this challenge.

### SUMMARY OF THE INVENTION

Aspects and embodiments of the invention provide an instrument trim panel, an automotive vehicle body, and a vehicle as claimed in the appended claims.

According to an aspect of the present invention there is provided an instrument trim panel for an automotive vehicle comprising a body having an exterior surface, at least a portion of which is textured, and a further surface, opposite said exterior surface, which is substantially non-textured,
wherein the textured portion of the exterior surface comprises a plurality of substantially parallel grooves, each groove having longitudinal axis which, in use, extends in a direction which is aligned with a first axis of the automotive vehicle,
wherein the substantially non-textured surface comprises a plurality of frangible tear lines configured to create one or more areas of weakness within the body of the instrument trim panel to facilitate the deployment of an airbag through the instrument trim panel in the event of a collision, and
wherein the plurality of substantially parallel grooves are spaced apart from one another in a second, lateral direction perpendicular to the longitudinal axes of the grooves such that at least a portion of one or more of the plurality of frangible tear lines provided on the substantially non-textured surface of the instrument trim panel are positioned directly beneath and are longitudinally aligned with one or more of the substantially parallel grooves provided on the exterior surface of the instrument trim panel.

Advantageously, it has been found that by spacing the grooves provided on the exterior (Class-A) surface of the instrument trim panel such that at least a portion of one or more of the frangible tear lines is positioned directly beneath, and is longitudinally aligned with, one or more of the substantially parallel grooves (which is an area in which the thickness (T) of the panel remains substantially constant), manufacturers are provided with greater tolerances when machining the frangible tear lines into the opposite (Class-B) surface of the panel since small offsets in the lateral (Y-axis) position of said frangible tear lines are likely to remain within the bounds of the respective grooves with which the frangible tear line are intended to be aligned. As such, said small off-sets are unlikely to adversely impact the breakthrough strength of the panel.

Furthermore, since the overall thickness (T) of the panel is typically thinner in regions adjacent to the grooves, spacing the grooves in this manner also helps to reduce the amount of energy required to machine the frangible tear lines into the panel, and also reduces the amount of material wastage generated during the machining process.

The exterior surface of the instrument trim panel may be considered a class-A surface. The term "Class-A surface" is a well-known term of art and is defined herein to mean a surface that is visible to a user during normal operation of the automotive vehicle.

The further (substantially non-textured) surface may be considered a class-B surface. The term "Class-B surface" is also a well-known term of art and is defined herein to mean a surface is not visible to a user during normal operation of the automotive vehicle.

It shall be appreciated that the term "substantially non-textured" is defined herein to mean that the substantially parallel repeating grooves are not mirrored on the opposite surface of the instrument trim panel.

It shall also be appreciated that the instrument trim panel may alternatively be referred to as a "instrument panel topper pad".

Optionally, the plurality of frangible tear lines may extend partially through a thickness of the body.

Advantageously, extending the frangible tear lines only partially through the thickness of the body enables the exterior surface of the instrumental trim panel to maintain a "seamless" appearance.

Optionally, the instrument trim panel may be a seamless trim panel.

It shall be appreciated that the term "seamless" is defined herein to mean that the plurality of frangible tear lines extend only partially through the thickness of the body such that they are not visible on the exterior (or class-A) surface of the panel.

Optionally, the plurality of frangible tear lines may be discontinuous tear lines.

Optionally, the plurality of frangible tear lines may be formed of a plurality of perforations.

Optionally, the plurality of perforations may be blind holes having their respective openings in the substantially non-textured surface of the instrument trim panel.

Optionally, the plurality of frangible tear lines may be produced via laser cutting (also known as laser punching) or, in other embodiments, the frangible tear lines may be produced via other suitable methods such as knife scoring, drilling, milling etc.

Optionally, the first axis may be a longitudinal axis of the automotive vehicle.

Optionally, the plurality of frangible tear lines may comprise:
a pair of longitudinal tear lines which extend in a direction which is aligned with the longitudinal axis of the automotive vehicle when the instrument trim panel is fitted to the automotive vehicle in use, wherein at least a portion of said longitudinal tear lines are positioned directly beneath and longitudinally aligned with one or more of the substantially parallel grooves provided on the exterior surface of the instrument trim panel; and
at least one lateral tear line extending transversely across the substantially non-textured surface of the instrument trim panel between the pair of longitudinal tear lines.

Optionally, the plurality of frangible tear lines may have a substantially "H-shaped" configuration.

Optionally, each of the longitudinal tear lines may comprise a pair of curved end portions which extend transversely across the substantially non-textured surface of the instrument trim panel and terminate at a point which is directly beneath a respective one of the substantially parallel grooves.

Advantageously, it has been found that terminating said end points directly beneath a respective one of the grooves helps to better guarantee the position of the frangible tear lines during manufacture of the instrument trim panel.

Optionally, the body of the instrument trim panel may comprise:
a rigid substrate layer which defines the substantially non-textured surface of the instrument trim panel;
a flexible cover layer which defines the exterior surface of the instrument trim panel; and
a foam sandwich layer which is provided between the rigid substrate layer and the flexible cover layer.

Optionally, the flexible cover layer and/or the foam sandwich layer may be formed of a polyurethane material.

Advantageously, it has been found that the provision of a polyurethane (PU) cover layer provides the instrument trim panel with a harder-wearing (i.e., abrasion-resistant) and more ergonomic exterior surface. Furthermore, the provision of a foam sandwich layer also allows loads (which may be applied onto the cover layer during use) to be spread more evenly across the instrument trim panel.

Optionally, the plurality of frangible tear lines may extend fully through the rigid substrate layer and the foam sandwich layer and extend only partially through the flexible cover layer.

Advantageously, extending the frangible tear lines only partially through the thickness of the flexible cover layer enables the exterior surface of the instrumental trim panel to maintain a "seamless" appearance.

Optionally, the foam sandwich layer may have a first thickness, and the flexible cover layer may have a second thickness which is less than the first thickness.

Optionally, the flexible cover layer may have a thickness of approximately 1mm.

Optionally, the plurality of substantially parallel grooves may each have a depth in the range of 0.5mm to 2mm.

Advantageously, it has been found that providing grooves having a depth in the range of 0.5mm to 2mm helps to prevent the grooves from reflecting onto the windscreen of the automotive vehicle, and therefore helps to maintain driver visibility. Furthermore, by keeping the depth of the grooves relatively shallow, in the event that one or more of the frangible tear lines becomes misaligned in the lateral direction during machining of the frangible tear lines into the opposite surface of the panel (such that one or more of the frangible tear lines is positioned directly beneath the non-grooved portion of the panel), the breakthrough strength of the panel is unlikely to be significantly impacted.

Optionally, the plurality of substantially parallel grooves may each have a depth of approximately 1mm.

Optionally, the plurality of substantially parallel grooves may each have a width in the range of 6mm to 7mm.

Advantageously, it has been found that providing grooves having a width in the range of 6mm to 7mm helps to prevent the grooves from reflecting onto the windscreen of the automotive vehicle, and therefore helps to maintain driver visibility. Furthermore, the provision of relatively wide grooves also affords manufactures with greater tolerances when machining the frangible tear lines into the opposite surface of the panel since small offsets in the lateral (Y-axis) position of the frangible tear lines are likely to remain within the bounds of the respective grooves with which said frangible tear lines are intended to be aligned. As such, said small off-sets are unlikely to adversely impact the breakthrough strength of the panel.

Optionally, the plurality of substantially parallel grooves may each have a width, and each of the grooves may be spaced apart in the second, lateral direction by a distance which is greater than the width of each groove.

Advantageously, it has been found that spacing the grooves in this manner helps to prevent the grooves from reflecting onto the windscreen of the automotive vehicle, and therefore helps to maintain driver visibility.

Optionally, the plurality of substantially parallel grooves may be spaced apart in the second, lateral direction by a distance which is in the range of 10mm to 15mm.

Advantageously, it has been found that spacing the grooves by a distance in the range of 10mm to 15mm helps to prevent the grooves from reflecting onto the windscreen of the automotive vehicle, and therefore helps to maintain driver visibility.

Optionally the plurality of substantially parallel grooves may be spaced apart in the second, lateral direction by a distance of approximately 13mm.

Optionally, each groove may comprises:
a base;
a pair of sidewall portions extending away from said base; and
a pair of rounded corner portions provided at the transitions between the base and the respective sidewall portions.

Advantageously, it has been found that radiused corner transitions help to further prevent the grooves from reflecting onto the windscreen of the automotive vehicle, and therefore help to maintain driver visibility.

In some embodiments, the base may be substantially flat. In other embodiments, the base may be rounded or angled.

In some embodiments, the pair of sidewall portions may be orientated substantially perpendicular to the base. In other embodiments, the pair of sidewall portions may be obliquely angled relative to the base.

Optionally, the rounded corner portions may have a corner radius in the range of 0.25mm to 0.5mm.

Optionally, the plurality of substantially parallel grooves may extend across the full width of the exterior surface.

In some embodiments, the plurality of substantially parallel grooves may extend across a substantial portion of the exterior surface of the instrument trim panel. In other words, a substantial portion of the instrument trim panel may be textured. In other embodiments, the plurality of substantially parallel grooves may extend only partially across the exterior surface of the instrument trim panel.

According to another aspect of the present invention there is provided an automotive vehicle body comprising:
an instrument panel;
an instrument trim panel according to any of the preceding claims mounted atop said instrumental panel; and
   an airbag deployment system housed beneath the instrument trim panel,
wherein the vehicle body comprises a front end, a rear end and a longitudinal axis which extends between the front and rear ends of the vehicle body, and
wherein the plurality of substantially parallel grooves provided on the exterior surface of the instrument trim panel extend in a direction which is aligned with the longitudinal axis of the vehicle body.

Optionally, the automotive vehicle body may comprise a plurality (e.g., a pair) of instrument trim panels.

According to yet another aspect of the present invention there is provided an automotive vehicle comprising the automotive vehicle body according to the previous aspect.

The term automotive vehicle is defined herein as a self-propelled land vehicle. Examples of such automotive vehicles include, but are not limited to, passenger cars, sport utility vehicles (SUVs), and commercial vehicles (e.g., vans, light truck etc.).

Optionally, the automotive vehicle may be an electric vehicle.

According to yet another aspect of the present invention there is provided an instrument trim panel for an automotive vehicle interior comprising a body having an exterior surface, at least a portion of which is textured,
wherein the textured portion of the exterior surface comprises a plurality of substantially parallel grooves which, in use, extend in a direction which is aligned with a longitudinal axis of an automotive vehicle,
wherein each groove has a width (W), and
wherein each of the grooves are spaced apart by a distance (D) which is greater than the width (W) of each groove.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle in accordance with an embodiment of the invention;
Figure 2 shows a top view of the vehicle illustrated in Figure 1 in which the roof structure is shown as being partially transparent so that components within the vehicle interior are made visible;
Figure 3 shows a side view of an instrument trim panel in accordance with an embodiment of the invention;
Figure 4 shows a side view of the flexible cover layer of the instrument trim panel being formed on a tool mould;
Figure 5 shows a top view of the instrument trim panel illustrated in Figure 3;
Figure 6 shows a bottom view of the instrument trim panel illustrated in Figure 3 in which the frangible tear lines provided on the substantially non-textured (Class-B) surface are visible;
Figure 7 shows a section view of the instrument trim panel illustrated in Figures 3, 5 and 6 in which the frangible tear lines can be seen to extend partially through a thickness (T) of the instrument trim panel; and
Figure 8 shows another top view of the instrument trim panel illustrated in Figures 3, 5 and 6 in which the frangible tear lines provided on the substantially non-textured (Class-B) surface have been superimposed onto the textured (Class-A) surface of the instrument trim panel to better illustrate their respective positions relative to the plurality of grooves.

### DETAILED DESCRIPTION

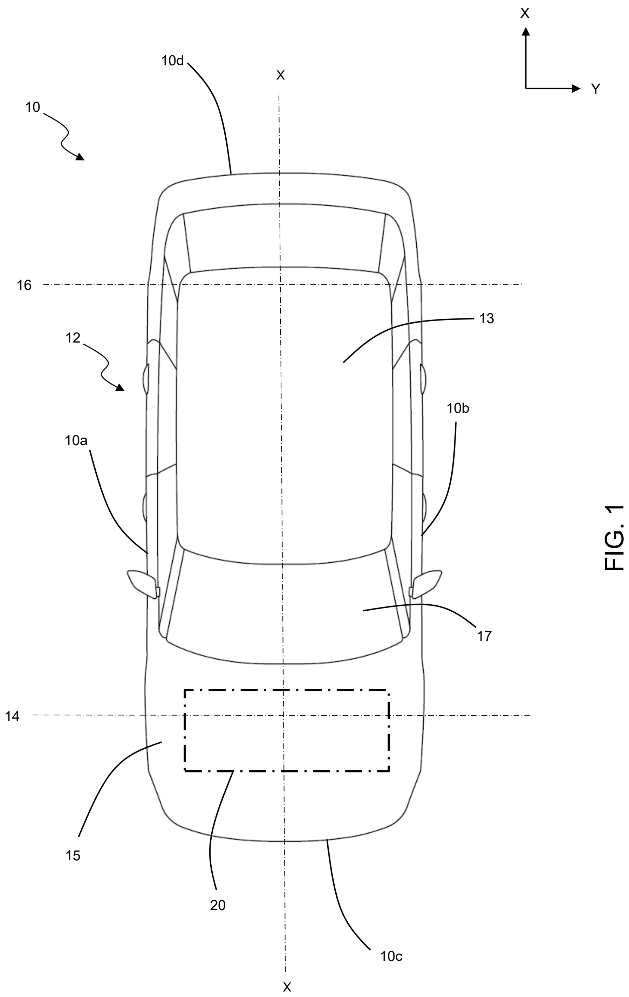

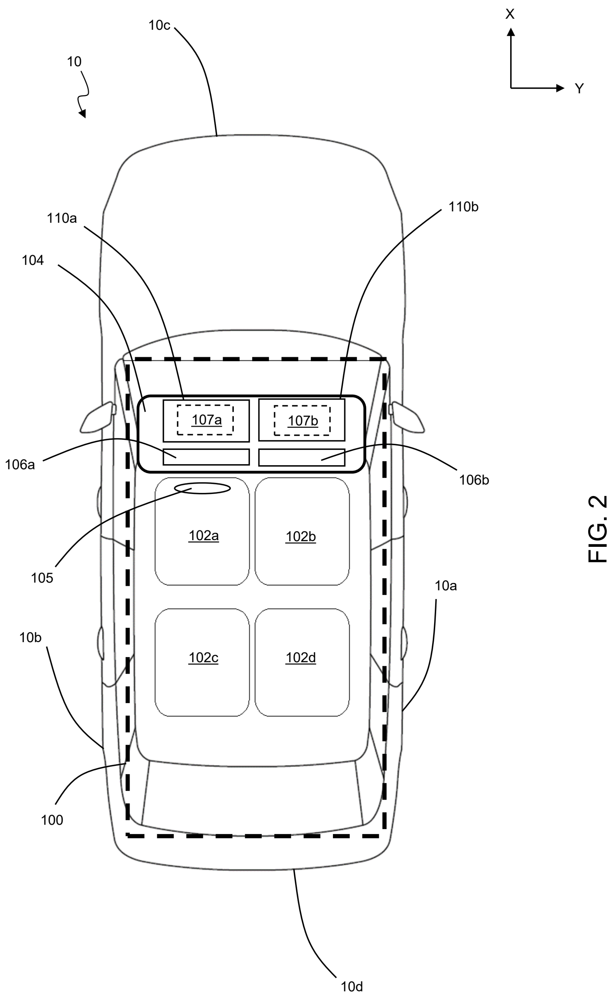

An automotive vehicle 10 in accordance with an embodiment of the present invention is described herein with reference to the accompanying Figures 1 and 2.

As shown in Figure 1, the vehicle 10 defines a central longitudinal axis X-X, a left side 10a and a right side 10b with respect to the central longitudinal axis X-X, and a front end 10c and a rear end 10d with respect to a forward direction of travel of the vehicle 10.

The vehicle 10 comprises a body 12 having a floor structure (not shown) and a roof structure 13. The body 12 defines a vehicle interior 100 (or "cabin") which is provided within the body 1 between the floor (not shown) and roof 13 structures respectively.

The floor structure (not shown) forms at least a lower part of the vehicle 10 and may be characterised as corresponding to the floor and sub-structure of the vehicle 10, for example between its front axle 14 and its rear axle 16. Meanwhile, the roof structure 13 forms at least an upper part of the vehicle 10.

The vehicle 10 also includes a propulsion system configured to provide motive power to the front 14 and/or rear 16 axles. The propulsion system includes a power source (not shown) and a vehicle drive unit 20 configured to provide motive power to the front 14 and/or rear 16 axles for propelling the vehicle 10.

In the illustrated embodiment, the vehicle 10 is a battery electric vehicle (BEV) 10. The vehicle drive unit 20 is therefore an electric drive unit (EDU) that contains an electric machine and one or more drivetrain components arranged to transfer motive power from the electric machine to the front 14 and/or rear 16 axles.

In the illustrated embodiment, the power source (not shown) is a traction battery comprising one or more battery modules for suppling electrical power to the vehicle drive unit 20 which may be recharged from an external electrical source.

A traction battery is defined herein as an energy storage unit that supplies power to the vehicle drive unit 20 for propelling the vehicle 10. As such, traction batteries are distinguished over other "non-traction" batteries which may be provided on the vehicle 10 (such as the service battery) which do not supply power to the vehicle drive unit 20 for propelling the vehicle 10.

For example, a traction battery will typically be a high voltage battery having a voltage in the region of 350V to 800V due to the energy demand of the vehicle drive unit 20, whereas a non-traction battery will typically be a low voltage battery often having a voltage at least an order of magnitude less than that of a high voltage battery (typically below 15V).

Whilst the vehicle 10 of the illustrated embodiment is a battery electric vehicle (BEV), it shall also be appreciated that in other embodiments, the vehicle 10 may be of a different type. For example, in some embodiments the vehicle 10 may be a plug-in hybrid electric vehicle (PHEV), in which case the vehicle drive unit 20 may comprise both an electric drive unit (EDU) and also an internal combustion engine (ICE). In further alternative embodiments, the vehicle 10 may be an internal combustion engine (ICE) vehicle, in which case the vehicle drive unit 20 may comprise an internal combustion engine (ICE) only.

Referring still to Figure 1, the vehicle 10 also comprises a bonnet 15 (or "hood"), which is provided proximate to the front end 10c of the vehicle 10 and covers the vehicle drive unit 20, and a wind-screen 17 (or "windshield"), which is mounted to the vehicle body 12 and extends between the bonnet 15 and the roof structure 13. The wind-screen 17 is arranged so as to provide visibility to the vehicle occupants whilst also protecting said occupants from inclement weather elements (e.g., wind, rain, etc.) and/or road debris during use.

Referring now to Figure 2, a top view of the vehicle 10 is shown in which the roof structure 13 of the vehicle 10 has been made partially transparent so that components within the vehicle interior 100 are visible.

As shown in Figure 2, the vehicle interior 100 has four seats which include a front driver-side seat 102a and a front passenger-side seat 102b, which are located within the vehicle interior 100 proximate to the front end 10c of the vehicle 10, and a rear driver-side passenger seat 102c and a rear passenger-side seat 102d, which are located within the vehicle interior 100 directly behind the front driver-side seat 102a and front passenger-side seat 102b respectively.

It shall be appreciated that whilst in the illustrated embodiment the front driver-side seat 102a is provided on the right side 10b of the vehicle 10, in other embodiments the front driver-side seat 102a may alternatively be provided on the left-side 10a of the vehicle 10. It shall also be appreciated that in some embodiments, the rear driver-side passenger seat 102c and the rear passenger-side seat 102d may be omitted.

The vehicle interior 100 also includes an instrument panel 104 (or "dashboard") which is located proximate to the front end 10c of the vehicle 10 and extends in the lateral (Y-axis) direction across the vehicle interior 100 between the left 10a and right 10b sides of the vehicle 10.

The instrument panel 104 includes an array of controls, such as a steering wheel 105, and associated driving instrumentation, such as a speedometer, tachometer, odometer, oil gauge, fuel gauge, turning indicators, gearshift position inductors, navigation system etc., for assisting the driver in controlling, operating and maintaining the vehicle 10.

In the illustrated embodiment, the aforementioned driving instrumentation, such as the speedometer, tachometer, odometer, oil gauge, fuel gauge, turning indicators, gearshift position inductors, navigation system etc., is incorporated into a HUD display system 106 which is mounted atop the instrument panel 104.

As shown in Figure 2, the HUD display system 106 comprises a pair of display screens 106a,b which are mounted to the instrument panel 104 directly in front of the front driver-side seat 102a and front passenger-side seat 102b respectively. However, it shall be appreciated that in other embodiments, the HUD display system 106 may comprise a different number of display screens such as 1, 3, 4 etc.

The HUD display system 106 may additionally form part of one or more further electrical systems of the vehicle 10. For example, the HUD display system 106 may act as a display screen, and optionally a user interface, to allow the vehicle occupants to view, and optionally interact with, an on-board entertainment system of the vehicle 10 and/or a navigation system of the vehicle 10. It shall also be appreciated that in some embodiments, the HUD display system 106 may act as a display screen for a rear-view camera of the vehicle 10.

The instrument panel 104 may also include a plurality of compartments (not shown).

In the illustrated embodiment, the instrument panel 104 comprises a storage compartment (e.g., a glove compartment), which provides a storage space for storing miscellaneous items which may belong to the vehicle owner and/or occupants, and a passenger airbag compartment (not shown), which is configured to house the front passenger airbag (not shown) and an associated airbag deployment system 107 for actuating the front passenger airbag in the event of a collision.

It shall also be appreciated that in some embodiments, the instrument panel 104 may comprise one or more further compartments for providing additional storage space within the vehicle interior 100 and/or for housing one or more additional airbags (and associated airbag deployment systems 107).

Referring still to Figure 2, the vehicle interior 100 also comprises at least one instrument trim panel 110 which is mounted atop the instrument panel 104. In the illustrated embodiment, the vehicle interior 100 comprises a pair of instrument trim panels 110a,b which are mounted atop the instrument panel 104 directly in front of the front driver-side 102a and front passenger-side 102b seats respectively.

However, it shall be appreciated that in other embodiments, the vehicle interior 100 may comprise a different number of instrument trim panels such as 1, 3, 4, 5, 6, 7, 8, 9, etc. It shall also be appreciated that in some embodiments, one or more of the instrument trim panels 110 may be provided at other parts of the vehicle interior 100 such as on the interior surface of the roof structure 13 (e.g., the vehicle headliner) and/or on one or more of the side airbags covers.

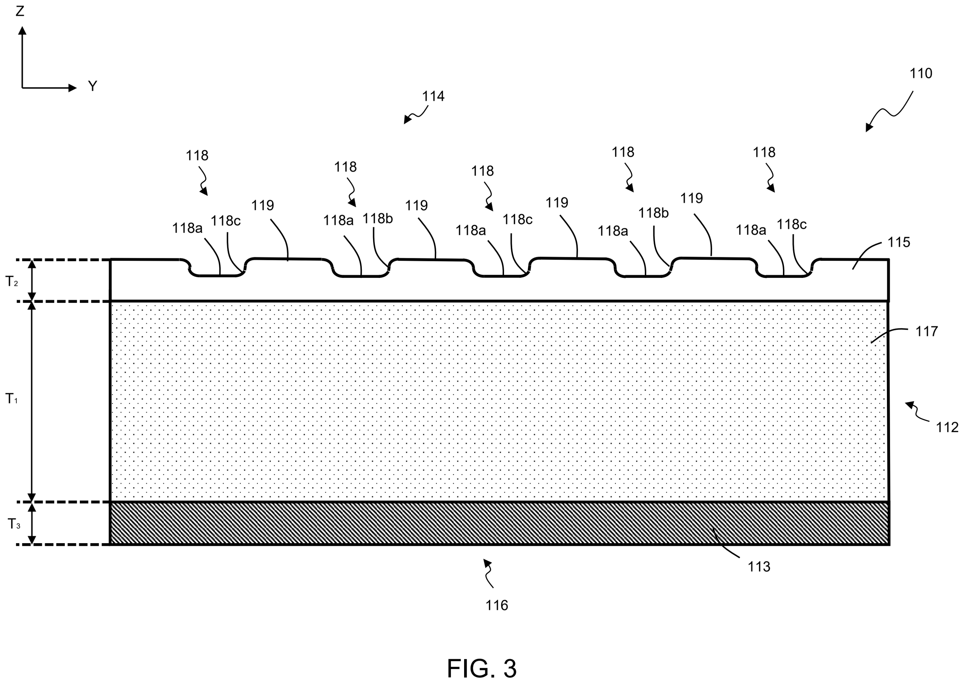

An instrument trim panel 110 in accordance with an embodiment of the present invention shall now be described in detail with reference to the accompanying Figures 3 to 8. It shall also be appreciated that the instrument trim panel 110 may alternatively be referred to as an "instrument panel topper pad".

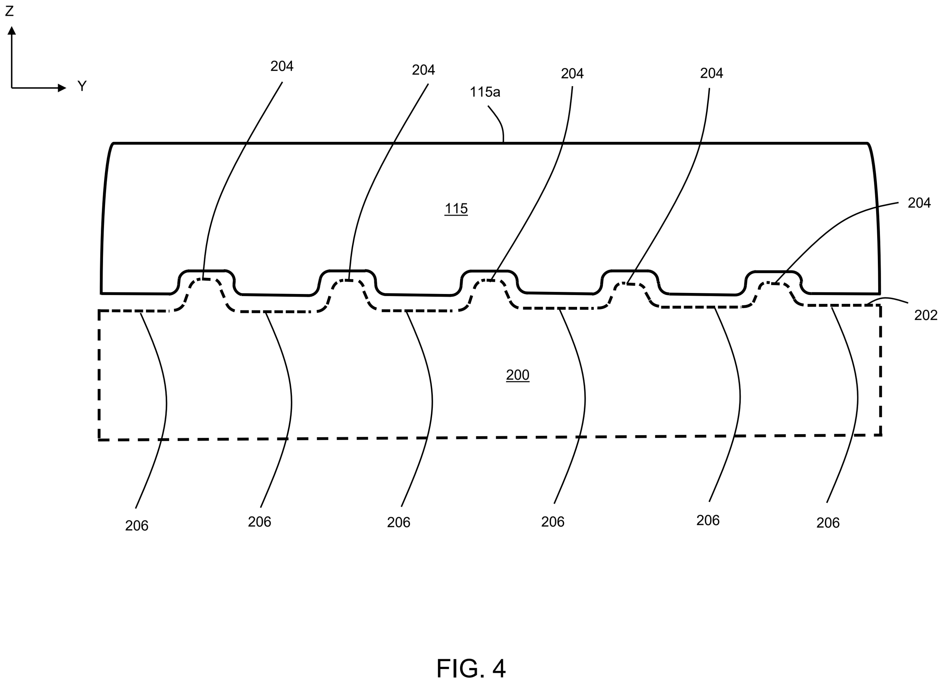

Referring firstly to Figures 3 and 4, the instrument trim panel 110 comprises a body 112 having an exterior surface 114, at least a portion of which is textured, and a further, substantially non-textured, surface 116, which is provided opposite to the exterior surface 114.

It shall be appreciated that the exterior surface 114 of the instrument trim panel 110 constitutes a Class-A surface of the vehicle 10 and hence the exterior surface 114 of the instrument trim panel 110 is visible to a user during normal operation of the automotive vehicle 10.

Meanwhile, the substantially non-textured surface 116 of the instrument trim panel 110 constitutes a Class-B surface of the vehicle 10 and hence the substantially non-textured surface 116 of the instrument trim panel 110 is not visible to a user during normal operation of the automotive vehicle 10.

As shown in Figure 2, in the illustrated embodiment, the instrument trim panel 110 has a roughly rectangular shape when viewed in plan view (i.e., looking along the Z-axis). However, it shall be appreciated that instrument trim panels having different shapes (such as square, oval, circular, etc.) may also be envisaged.

Referring back to Figure 3, in the illustrated embodiment, the body 112 of the instrument trim panel 110 is of a three-part construction and is made up of a rigid substrate layer 113, which defines the substantially non-textured (or Class-B) surface 116 of the instrument trim panel 110, a flexible cover layer 115, which defines the exterior (or Class-A) surface 114 of the instrument trim panel 100, and a foam sandwich layer 117, which is provided between the rigid substrate layer 113 and the flexible cover layer 115.

In the illustrated embodiment, the flexible cover layer 115 is formed of a polymeric material (e.g., polyurethane) and is manufactured by spraying multiple layers of said polymeric material onto a suitable tool mould 200 until a cover layer 115 having a desired thickness (e.g., 1mm) has been obtained.

Advantageously, it has been found that the provision of a polyurethane (PU) cover layer provides the instrument trim panel with a harder-wearing (i.e., abrasion-resistant) and more ergonomic exterior surface 116. Meanwhile, the provision of a foam sandwich layer 117 allows loads (which may be applied onto the cover layer 115 during use) to be spread more evenly across the instrument trim panel 100.

A tool mould 200 suitable for forming the flexible cover layer 115 of the instrument trim panel 110 is illustrated in Figure 4.

As shown in Figure 4, the tool mould 200 comprises a plurality of longitudinal ridges 204 which extend along its surface 202 which are spaced apart in the lateral (Y-axis) direction by a plurality of substantially flat regions 206. As such, when multiple layers of the polymeric material are sprayed onto the surface 202 of the tool mould 200, the polymeric material will conform to the shape of the negative (or empty) space defined by the surface 202 of the tool mould 200, thereby forming a flexible cover layer 115 comprising a plurality of substantially parallel grooves 118 which extend longitudinally along the exterior (or Class-A) surface 114 of the instrument trim panel 110 (as shall be described in greater detail later within this application).

Once a cover layer 115 having the desired thickness has been obtained, the flexible cover layer 115 is then secured relative to the rigid substrate layer 113 (e.g., via a clamp or vice) such that an empty space is formed between the lower (Class-B) surface 115a of the cover layer 115 and the rigid substrate layer 113.

A polymer foam is then injected into said empty space defined between the rigid substrate layer 113 and the flexible cover layer 115 before being allowed to set / cure to form the foam sandwich layer 117 of the instrument trim panel 110. The polymer foam may be the same material (e.g., polyurethane) as that of the flexible cover layer 115 or may be a different material in some embodiments.

As shown in Figure 3, in the illustrated embodiment the foam sandwich layer 117 has a thickness (T₁) which is greater than a thickness (T₂) of the flexible cover layer 115 and which is also greater than a thickness (T₃) of the rigid substrate layer 113. However, it shall be appreciated that in other embodiments, foam sandwich layer 117 having different thicknesses may be envisaged.

It shall also be appreciated that the aforementioned method is intended to merely provide an example of one way in which the instrument trim panel 110 may be manufactured. As such, it shall be appreciated that in other embodiments, the instrument trim panel 110 may be manufactured using any other suitable method (such as injection moulding, machining, resin transfer moulding, etc.).

Furthermore, it shall be appreciated that whilst the instrument trim panel illustrated in Figure 3 is of a three-part construction, in other embodiments the instrument trim panel 110 may be of a two-part construction (in which the foam sandwich layer 117 and/or the rigid substrate layer 113 may be omitted) or may be provided as a single unitary part (in which both the foam sandwich layer 117 and the rigid substrate layer 113 may be omitted).

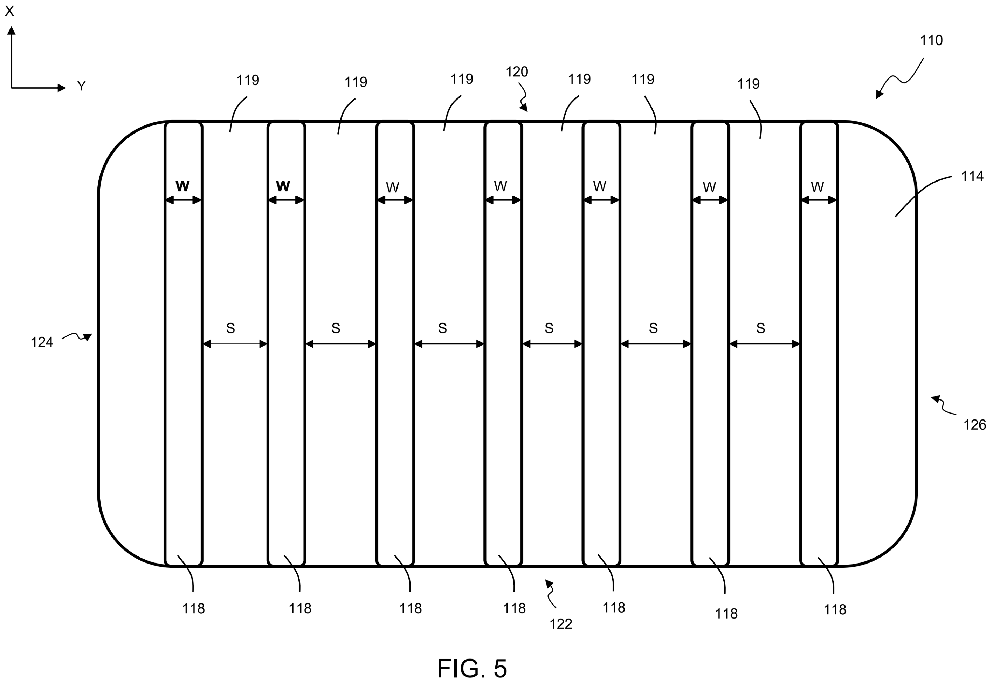

Referring now to Figures 3 and 5, the exterior (or Class-A) surface of the instrument trim panel 110 shall now be described in further detail.

As alluded to above, the textured portion of the exterior surface 116 comprises a plurality of substantially parallel grooves 118 which extend in a longitudinal (X-axis) direction between from a front edge 120 of the instrument trim panel 110 to a rear edge 122 of the instrument trim panel 110.

In the illustrated embodiment, the instrument trim panels 110a,b are mounted within the vehicle interior 100 such that the longitudinal axes of the grooves 118 extend in a direction which aligns with the central longitudinal axis (X-X) of the vehicle 10. However, it shall be appreciated that in other embodiments, the instrument trim panel(s) 110 may be mounted in different orientations about the vehicle interior 100.

As shown in Figure 5, the plurality of substantially parallel grooves each comprise a width (W) and are spaced apart from one another in the lateral (Y-axis) direction by a distance (S) such that a series of substantially flat regions 119 are provided between the adjacent grooves 118.

In some embodiments, the textured portion, and hence the plurality of substantially parallel grooves 118, may extend across a substantial portion of the exterior surface 116 of the instrument trim panel 110. For example, the textured portion may extend across at least 60% (and optionally at least 80%) of the width of the instrument trim panel 110.

In the illustrated embodiment, the textured portion, and hence the plurality of substantially parallel grooves 118, extend across the full width of the exterior surface 116 from a left edge 124 of the instrument trim panel 110 to a right edge 126 of the instrument trim panel 110.

However, it shall be appreciated that in other embodiments, the plurality of substantially parallel grooves 118 may extend only partially across the width of the exterior surface 116.

Referring now to Figure 3, the plurality of substantially parallel grooves 118 each comprise a base 118a, which is offset in the thickness (Z-axis) direction from the exterior surface 116 of the instrument trim panel 110 by a depth (D), and a pair of sidewall portions 118b, which extend away from the base 118a towards the exterior surface 116 of the instrument trim panel 110.

As shown in Figure 3, the base 118a of each groove 118 is substantially flat (i.e., perpendicular to the Z-axis of the instrument trim panel 110) and the respective sidewall portions 118b are orientated substantially perpendicular to the base 118a (i.e., parallel to the Z-axis of the instrument trim panel 110). However, it shall be appreciated that in other embodiments, the respective bases 118a of each groove 118 may be rounded or angled, and/or the respective sidewall portions 118b of each groove 118 may be obliquely angled relative to the base 118a.

The plurality of substantially parallel grooves 118 may also comprise a pair of rounded corner portions 118c which are provided at the transitions between the base 118a and the respective sidewall portions 118b. In the illustrated embodiment, the rounded corner portions 118c each have a corner radius in the range of 0.25mm to 0.5mm.

Advantageously, it has been found to incorporating rounded corner portions 118c having a corner radius in the range of 0.25mm to 0.5mm helps to prevent the grooves 118 from reflecting onto the windscreen 17 of the vehicle 10 during use, and therefore helps to maintain driver visibility.

However, it shall be appreciated that in other embodiments, the plurality of substantially parallel grooves 118 may feature a different rounded corner radius or, in further alternatives, may feature sharp corners between the base 118a and respective sidewall portions 118b.

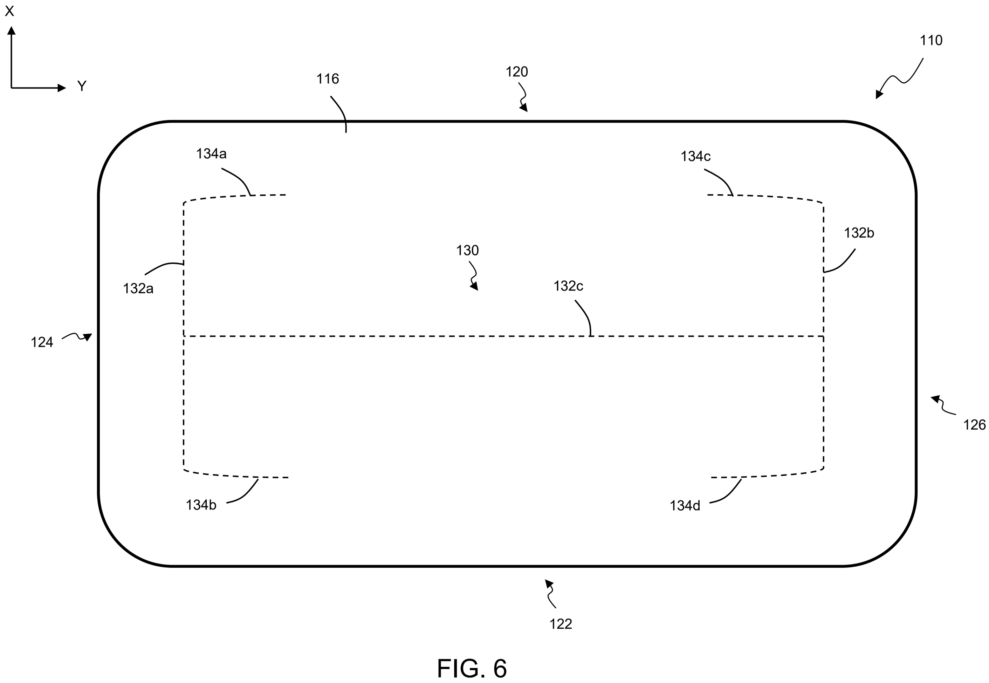

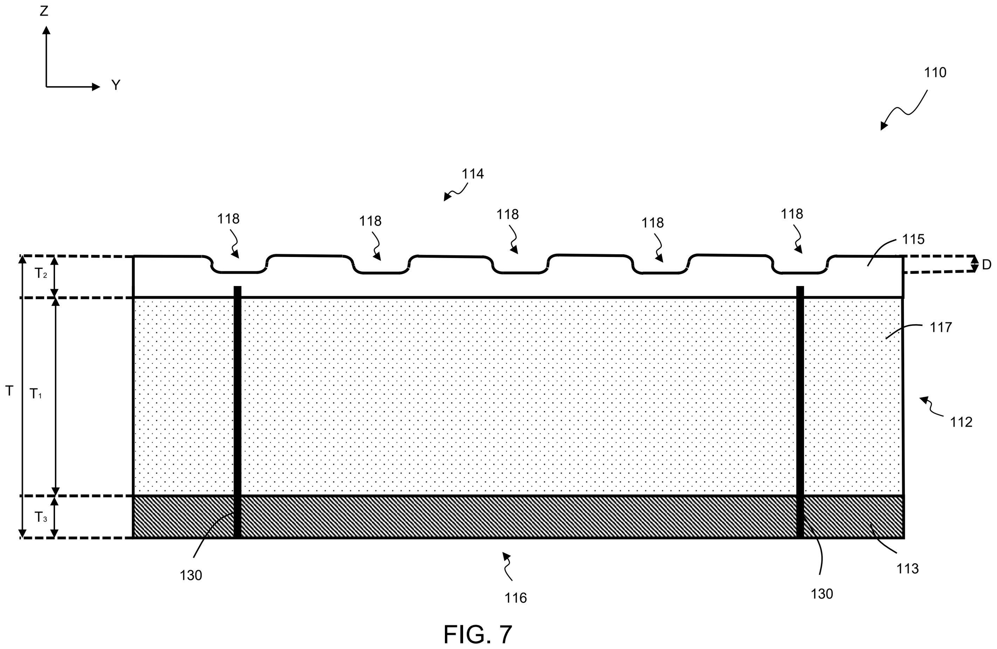

Referring now to Figures 6 and 7, the substantially non-textured (or Class-B) surface 116 of the instrument trim panel 110 shall now be described. The term "substantially non-textured" is defined herein to mean that the substantially parallel repeating grooves 118 are not mirrored on the opposite (Class-B) surface 116 of the instrument trim panel 110.

As shown in Figure 6, the substantially non-textured surface 116 comprises a plurality of frangible tear lines 130 which are configured to create one or more areas of weakness within the body 112 of the instrument trim panel 110 to facilitate the deployment of an airbag housed beneath the instrument trim panel 110 in the event of a collision.

In the illustrated embodiment, the plurality of frangible tear lines 130 are arranged in a substantially "H-shaped" configuration and include a pair of longitudinal tear lines 132a,b which extend in a direction which is aligned with the central longitudinal (X-X) axis of the vehicle 10 when the instrument trim panel 110 is mounted to the instrument panel 104 of said vehicle 10, and at least one lateral tear line 132c which extends transversely (i.e., in the lateral Y-axis direction) across the substantially non-textured (or Class-B) surface 116 of the instrument trim panel 110, perpendicular to and between the pair of longitudinal tear lines 132a,b.

The plurality of frangible tear lines 130 may also include one or more curved (or actuate) end portions 134a-d which extend transversely (i.e., in the lateral Y-axis direction) across the substantially non-textured (or Class-B) surface 116 of the instrument trim panel 110 from the respective end points of the longitudinal tear lines 132a,b, and terminate at a point which is directly beneath one of the respective grooves 118 provided in the exterior (Class-A) surface 114 of the panel 110.

Advantageously, it has been found that terminating the end points of said end portions 134a-d directly beneath a respective one of the grooves 118 helps to better guarantee the position of the frangible tear lines 130 during manufacture of the instrument trim panel 110.

However, it shall be appreciated that in other embodiments, the frangible tear lines 130 may be arranged in other suitable patterns or arrangements. For example, in some embodiments, the respective end portions 134a-d and/or the lateral tear line 132c may be omitted.

The plurality of frangible tear lines 130 may be formed of a plurality of perforations (e.g., blind holes having their respective openings at the substantially non-textured surface 116 of the panel 110) or may be provided as a series of substantially continuous tear lines. It shall be appreciated that the plurality of frangible tear lines 130 may be produced via laser cutting (or laser punching), knife scoring, drilling, milling or any other suitable method.

Referring now to Figure 7, the plurality of frangible tear lines 130 of the illustrated embodiment extend partially through the thickness (T) of the body 112.

As shown in Figure 7, the frangible tear lines 130 extend through the full thickness (T₃) of the rigid substrate layer 113, through the full thickness (T₁) of the foam sandwich layer 117 and terminate at a point within the thickness (T₂) of the flexible cover layer 115. In other words, the plurality of frangible tear lines 130 extend only partially through the thickness (T₂) of the flexible cover layer 115. This enables the instrument trim panel 110 to maintain a "seamless" appearance at the exterior (or Class-A) surface 114.

It shall be appreciated that the term "seamless" is defined herein to mean that the plurality of frangible tear lines 130 extend only partially through the thickness (T) of the body 112 such that they are not visible on the exterior (or Class-A) surface 114 of the panel 110.

As alluded to in the Background section above, the breakthrough strength of the instrument trim panel 110 is primarily influenced by the strength of the material (e.g., polyurethane) from which the body 112 of the instrument trim panel 100 is formed and also by the amount of material that is present between the point within the thickness (T) of the instrument trim panel 110 at which the frangible tear line(s) 130 terminate and the exterior (or Class-A) surface 114 of the instrument trim panel 110.

As such, it shall be appreciated that the points at which the plurality of frangible tear lines 130 terminate within the thickness (T) of the body 112 must be carefully chosen in order to obtain an instrument trim panel 110 having a desired breakthrough strength.

Therefore, when machining the plurality of frangible tear lines 130 into the substantially non-textured surface 116 of the instrument trim panel 110, it is important for manufacturers to accurately control and maintain the depth of cut of said frangible tear lines 130.

For example, if the frangible tear lines 130 are cut too deep, the instrument trim panel 110 may become fragile, making it difficult for manufacturers to handle during installation. Furthermore, in extreme cases, the frangible tear lines 130 may also appear visible on the exterior (Class-A) surface 114 of the panel 110 thereby causing said panel 110 to lose its desirable "seamless" appearance.

This problem is further exacerbated in grooved trim panels which feature varying thicknesses, and also in panels 110 which have been manufactured via spray lay-up (often referred to as over-spraying) since, when using such methods, it is difficult to precisely control the thickness of the panel 110.

As such, in panels of this type, the breakthrough strength may vary at different points across the panel 110 since, even if the depth of cut remains constant when measured from the substantially non-textured (Class-B) surface 116 of the panel 110, the amount of material that is present between the point within the thickness (T) of the instrument trim panel 110 at which the frangible tear line(s) 130 terminate and the exterior (or Class-A) surface 114 of the instrument trim panel 110 (and hence the breakthrough strength of the panel) may still vary due to the varying thickness of the panel 110.

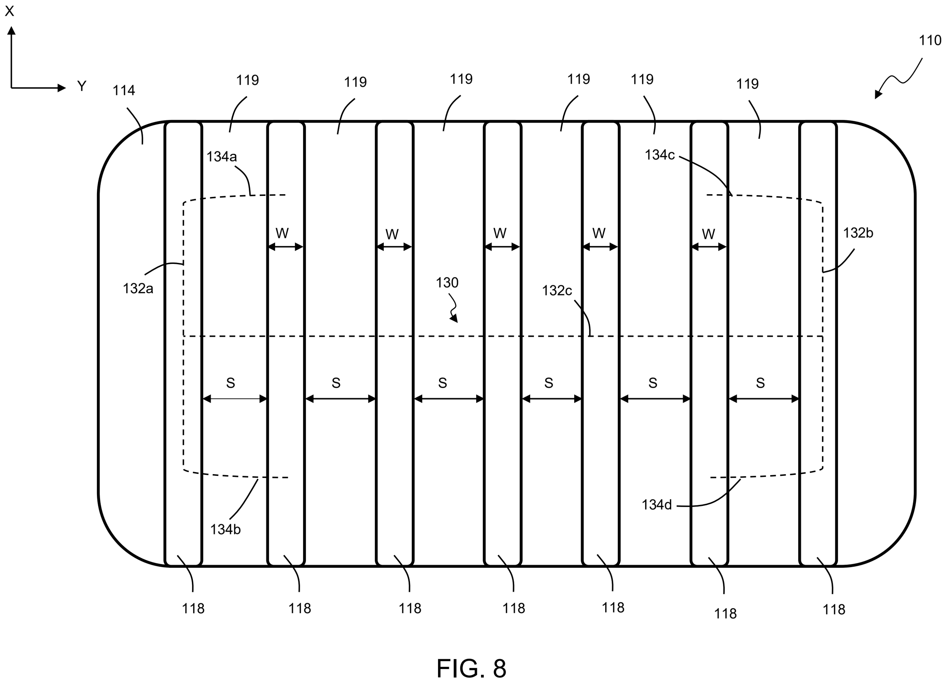

Referring now to Figure 8, a top view of the instrument trim panel 110 is depicted in which the frangible tear lines 130 provided on the substantially non-textured (Class-B) surface 116 have been superimposed onto the textured (Class-A) surface 114 of the instrument trim panel 110 so as to better illustrate their respective positions relative to the plurality of grooves 118.

As shown in Figure 8, the plurality of substantially parallel grooves 118 are spaced apart in the lateral (Y-axis) direction by a distance (S) such that at least a portion of one or more of the longitudinal tear lines 132a,b is positioned directly beneath, and is longitudinally aligned with, one or more of the substantially parallel grooves 118 provided on the exterior (Class-A) surface 114 of the instrument trim panel 110.

In the illustrated embodiment, a substantial portion (e.g., over 60%) of both of the longitudinal tear lines 132a,b provided on the substantially non-textured (Class-B) surface 116 of the instrument trim panel 110 are positioned directly beneath, and are longitudinally aligned with, a respective pair of the substantially parallel grooves 118 provided on the exterior (Class-A) surface 114 of the instrument trim panel 110.

Advantageously, it has been found that by spacing the grooves 118 provided on the exterior (Class-A) surface 114 of the instrument trim panel 110 such that at least a portion of one or more of the longitudinal tear lines 132a,b is positioned directly beneath, and is longitudinally aligned with, one or more of the substantially parallel grooves 118 (which is an area in which the thickness (T) of the panel 110 remains substantially constant), manufacturers are provided with greater tolerances when machining the frangible tear lines 130 into the opposite (Class-B) surface 116 of the panel 110 since small offsets in the lateral (Y-axis) position of said longitudinal tear lines 132a,b are likely to still remain within the bounds of the respective grooves 118 with which the longitudinal tear line 132a,b are intended to be aligned. As such, said small off-sets are unlikely to adversely impact the breakthrough strength of the panel 110.

Furthermore, since the overall thickness (T) of the panel 110 is typically thinner in regions adjacent to the grooves 118, spacing the grooves 118 in this manner also helps to reduce the amount of energy required to machine the frangible tear lines 130 into the panel 110, and also reduces the amount of material wastage generated during the machining process.

In the illustrated embodiment, the plurality of substantially parallel grooves 118 are spaced apart in the lateral (Y-axis) direction by a distance (S) which is greater than the width (W) of each groove 118. More particularly, in the illustrated embodiment, the plurality of substantially parallel grooves 118 are spaced apart in the lateral (Y-axis) direction by a distance (S) which is in the range of 10mm to 15mm (e.g., approximately 13mm).

Advantageously, it has been found that spacing the grooves 118 in this manner helps to prevent the grooves 118 from reflecting onto the windscreen 17 of the automotive vehicle 10, and therefore helps to maintain driver visibility.

However, it shall be appreciated that in other embodiments, the plurality of substantially parallel grooves 118 may be spaced apart by different distances (S) in the lateral (Y-axis) direction.

In the illustrated embodiment, the plurality of substantially parallel grooves 118 each have a width (W) in the range of 6mm to 7mm. However, it shall be appreciated that in other embodiments, the plurality of substantially parallel grooves may comprise different widths (W).

Advantageously, it has been found that providing grooves 118 having a width (W) in the range of 6mm to 7mm helps to further prevent the grooves 118 from reflecting onto the windscreen 17 of the automotive vehicle 10, and therefore helps to maintain driver visibility.

Furthermore, the provision of relatively wide grooves 118 also affords manufacturers with greater tolerances when machining the frangible tear lines 130 into the opposite (Class-B) surface 116 of the instrument trim panel 110 since small offsets in the lateral (Y-axis) position of the longitudinal tear lines 132a,b are likely to remain within the bounds of the respective grooves 118 with which the longitudinal tear lines 132a,b are intended to be aligned. As such, said small off-sets are unlikely to adversely impact the breakthrough strength of the panel 110.

Finally, referring back to Figure 7, in the illustrated embodiment, the plurality of substantially parallel grooves 118 each have a depth (D) in the range of 0.5mm to 2mm (e.g., approximately 1mm).

Advantageously, it has been found that providing grooves 118 having a depth in the range of 0.5mm to 2mm helps to even further prevent the grooves 118 from reflecting onto the windscreen 17 of the vehicle 10 during use, and therefore helps to maintain driver visibility.

Furthermore, by keeping the depth (D) of the grooves 118 relatively shallow, in the event that one or more of the longitudinal tear lines 132a,b becomes misaligned in the lateral (Y-axis) direction during machining of the frangible tear lines 130 into the substantially non-textured (Class-B) surface 116 of the panel 110 such that one or more portions of the longitudinal tear lines 132a,b are positioned directly beneath one of the substantially flat regions 119 of the panel 110, the breakthrough strength of the panel 110 is unlikely to be significantly impacted.

As such, the instrument trim panel 110 according to the claimed invention is able to afford manufacturers with greater tolerances when machining frangible tear lines 130 into the opposite (Class-B) surface 116 of the panel 110.

It will be appreciated that various changes and modifications can be made to the present invention without departing from the scope of the present application.

## Claims

1. An instrument trim panel for an automotive vehicle comprising a body having an exterior surface, at least a portion of which is textured, and a further surface, opposite said exterior surface, which is substantially non-textured,
wherein the textured portion of the exterior surface comprises a plurality of substantially parallel grooves, each groove having longitudinal axis which, in use, extends in a direction which is aligned with a first axis of the automotive vehicle,
wherein the substantially non-textured surface comprises a plurality of frangible tear lines configured to create one or more areas of weakness within the body of the instrument trim panel to facilitate the deployment of an airbag through the instrument trim panel in the event of a collision, and
wherein the plurality of substantially parallel grooves are spaced apart from one another in a second, lateral direction perpendicular to the longitudinal axes of the grooves such that at least a portion of one or more of the plurality of frangible tear lines provided on the substantially non-textured surface of the instrument trim panel are positioned directly beneath and are longitudinally aligned with one or more of the substantially parallel grooves provided on the exterior surface of the instrument trim panel.

2. The instrument trim panel according to claim 1, wherein the plurality of frangible tear lines extend partially through a thickness of the body.

3. The instrument trim panel according to claim 1 or 2, wherein the first axis is a longitudinal axis of the automotive vehicle.

4. The instrument trim panel according to claim 3, wherein the plurality of frangible tear lines comprise:
a pair of longitudinal tear lines which extend in a direction which is aligned with the longitudinal axis (X-X) of the automotive vehicle when the instrument trim panel is fitted to the automotive vehicle in use, wherein at least a portion of said longitudinal tear lines are positioned directly beneath and longitudinally aligned with one or more of the substantially parallel grooves provided on the exterior surface of the instrument trim panel; and
at least one lateral tear line extending transversely across the substantially non-textured surface of the instrument trim panel between the pair of longitudinal tear lines.

5. The instrument trim panel according to claim 4, wherein each of the longitudinal tear lines comprises a pair of curved end portions which extend transversely across the substantially non-textured surface of the instrument trim panel and terminate at a point which is directly beneath a respective one of the substantially parallel grooves.

6. The instrument trim panel according to any preceding claim, wherein the body of the instrument trim panel comprises:
a rigid substrate layer which defines the substantially non-textured surface of the instrument trim panel;
a flexible cover layer which defines the exterior surface of the instrument trim panel; and
a foam sandwich layer which is provided between the rigid substrate layer and the flexible cover layer.

7. The instrument trim panel according to claim 6, wherein the plurality of frangible tear lines extend fully through the rigid substrate layer and the foam sandwich layer and extend only partially through the flexible cover layer.

8. The instrument trim panel according to any preceding claim, wherein the plurality of substantially parallel grooves each have a depth in the range of 0.5mm to 2mm, optionally approximately 1mm.

9. The instrument trim panel according to any preceding claim, wherein the plurality of substantially parallel grooves each have a width in the range of 6mm to 7mm.

10. The instrument trim panel according to any preceding claim, wherein the plurality of substantially parallel grooves each have a width, and wherein each of the grooves are spaced apart in the second, lateral direction by a distance which is greater than the width of each groove.

11. The instrument trim panel according to any preceding claim, wherein the plurality of substantially parallel grooves are spaced apart in the second, lateral direction by a distance which is in the range of 10mm to 15mm, and optionally wherein the distance is approximately 13mm.

12. The instrument trim panel according to any preceding claim, wherein each groove comprises:
a base;
a pair of sidewall portions extending away from said base; and
a pair of rounded corner portions provided at the transitions between the base and the respective sidewall portions.

13. The instrument trim panel according to any preceding claim, wherein the plurality of substantially parallel grooves extend across the full width of the exterior surface.

14. An automotive vehicle body comprising:
an instrument panel;
an instrument trim panel according to any of the preceding claims mounted atop said instrumental panel; and
an airbag deployment system housed beneath the instrument trim panel,
wherein the vehicle body comprises a front end, a rear end and a longitudinal axis which extends between the front and rear ends of the vehicle body, and
wherein the plurality of substantially parallel grooves provided on the exterior surface of the instrument trim panel extend in a direction which is aligned with the longitudinal axis of the vehicle body.

15. An automotive vehicle comprising the automotive vehicle body according to claim 14, and optionally wherein the automotive vehicle is an electric vehicle.
